# EUROPEAN PATENT SPECIFICATION

(11) **EP 2 568 853 B1**
(45) Date of publication and mention of the grant of the patent: **03.07.2019**
(21) Application number: 11780985.5
(22) Date of filing: 13.04.2011
(51) Int. Cl.: A47C 7/72, F16B 5/06, F16B 5/12, F16B 21/02

(54) **VIDEO BEZEL SEAT ATTACHMENT**
VIDEOMONITORANBRINGUNG AN EINEM SITZ
FIXATION DE CADRE VIDÉO DE SIÈGE

(30) Priority: 10.05.2010 US 776638
(43) Date of publication of application: 20.03.2013
(73) Proprietor: BE Aerospace, Inc., Wellington, FL 33414 (US)
(72) Inventor: RUDKOWSKI, Leon, Winston-Salem, North Carolina 27106 (US); POZZI, Alexander, Winston-Salem, North Carolina 27104 (US)
(74) Representative: Appleyard Lees IP LLP
(86) International application number: PCT/US2011/032238
(87) International publication number: WO 2011/142925

(56) References cited:
- US-A- 5 461 808
- US-A1- 2007 057 541
- US-A1- 2007 057 541
- US-B1- 6 267 543

## Description

### TECHNICAL FIELD OF THE INVENTION

This invention relates generally to a bezel for a video monitor, and more particularly to a bezel for mounting a video monitor onto a seat back.

### BACKGROUND OF THE INVENTION

A typical airline passenger cabin is equipped with one or more video monitors along the ceiling of the cabin above an aisle between columns of seats. These monitors are viewed by many passengers at once, and so each passenger has little or no choice in selecting content to be viewed. Passengers nonetheless have a variety of tastes. There are typically both adults and children present, and so the selection of age-appropriate content, for example, is not well served by a single monitor being viewed by a cabin full of passengers.

Video monitors are becoming increasingly available in large and small sizes, and are becoming increasingly affordable. Thus, in the interest of engaging and entertaining all passengers, it would be desirable to provide a dedicated video monitor for particular viewing by each passenger. Personal video monitors for mounting within automobiles have straps and the like for attaching the monitors to seat backs and visors and such. However, in an airline environment, temporary straps and the like are undesirable because they have cluttered appearances and they invite handling and tampering by curious passengers such as children.

Therefore an arrangement for mounting a video monitor for personal viewing in an aircraft passenger cabin is needed.

US 2007/0057541A1 shows an angle-adjusting apparatus for a housing of a headrest display and US 6,267,543B1 shows a latch with spring. US2008246320 and US5461808 show further examples of the related art.

### BRIEF SUMMARY OF THE INVENTION

It is an object of the present invention to provide a bezel assembly for mounting a video monitor onto a back of a passenger seat. In one embodiment the bezel assembly includes a bezel according to claim 1.

In at least one example, the spring clip includes a mounting plate, a retaining shoulder connected perpendicularly to the mounting plate, and a turned edge connected to the retaining shoulder and extending away from the mounting plate to guide the retaining lip of the bezel.

In at least one example, the bezel has a peripheral wall from which the retaining lip extends outwardly, a hooked flange extending outwardly from the peripheral wall, and a channel formed between the retaining lip and the hooked flange.

In at least one example, the spring-loaded connector includes a cylindrical shaft and a wide key, and the bezel assembly further includes a bracket for attaching the internal rib to the seat back frame in cooperation with the spring-loaded connector. An aperture formed through the bracket has a central hole for receiving the shaft and radial slots for passage of the wide key.

In at least one example, the bracket includes a mounting plate and a retaining shelf in which the aperture is formed. The retaining shelf is connected perpendicularly to the mounting plate.

In at least one example, the bezel has a peripheral wall in which an access hole is formed for permitting access to the spring-loaded connector.

It is another object of the present invention to provide a method of attaching a video monitor bezel onto a back of a passenger seat according to claim 7.

### BRIEF DESCRIPTION OF THE DRAWINGS

The subject matter that is regarded as the invention may be best understood by reference to the following description taken in conjunction with the accompanying drawing figures in which:
Figure 1 is a perspective view of a video monitor bezel mounted on a seat back according to one embodiment of the present invention;
Figure 2 shows the bezel of Figure 1 with broken view areas in which attachment components along the top of the bezel are shown;
Figure 3 is a cut-away view showing a retaining lip of the bezel engaged by a spring clip;
Figure 4 is cross-sectional perspective view of the retaining lip engaged by the spring clip;
Figure 5 is an exploded perspective view of the components illustrated in Figure 4;
Figure 6 is an exploded perspective view in which attachment components along the bottom of the bezel are shown;
Figure 7 is a cut-away view of the attachment components of Figure 6 being engaged to mount the bezel on the seat back; and
Figures 8 and 9 are cross-sectional views of the components of Figure 6.

### DETAILED DESCRIPTION OF THE INVENTION

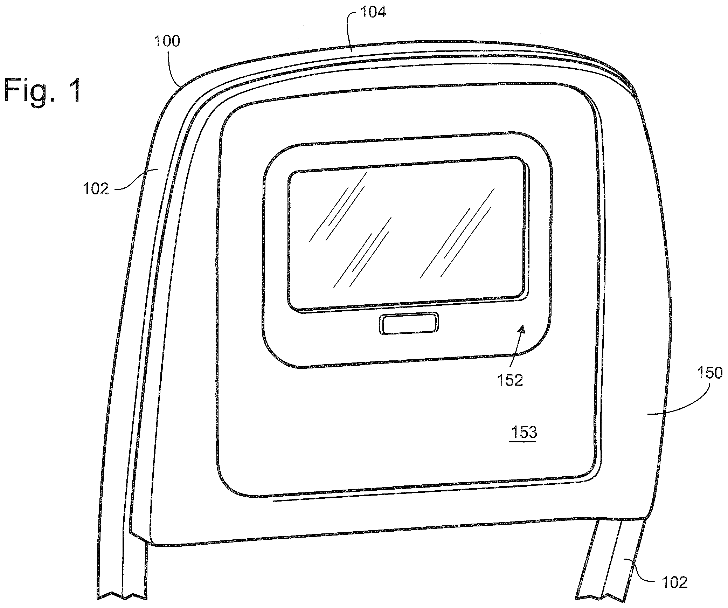

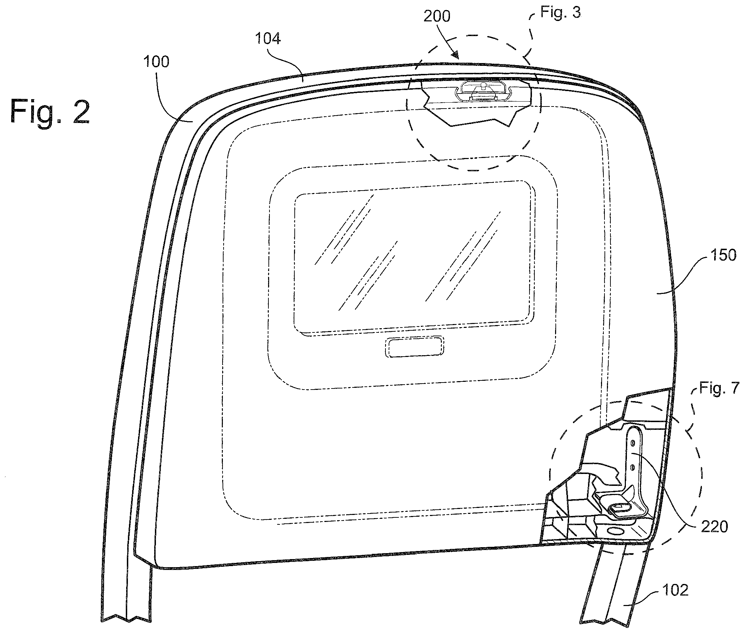

Referring to the drawings, in which identical reference numerals denote the same elements throughout the various views, Figures 1 and 2 illustrate a video monitor bezel 150 attached to a seat back frame 100, according to one embodiment of the present invention. The seat back frame 100 includes two generally vertical arms 102 and a generally horizontal top bar 104 that connects the upper ends of the vertical arms and defines the top of the seat back frame. The arms 102 and top bar 104 are illustrated as hollow tubular members having rectangular cross sections. They may be constructed of metals such as steel and aluminum, composite materials such as carbon fibers and resin, and suitably rigid and strong plastics. The seat back frame 100 may be a component of an airline passenger seat for example.

The bezel 150 visually fills an upper portion of the space between the vertical arms 102 and top bar 104 of the seat back frame 100, and provides a vertical platform into which the video monitor 50 is mounted as shown in Figure 1. The video monitor 50 is sunk into a recess 152 formed in the outer surface 153 of the bezel. The seat back frame 100 is capable of assuming upright and reclined configurations, and so the degree to which the video monitor 50 is held vertical varies as it travels with the adjustable seat back frame. In the illustrated example, the bezel 150 is constructed of molded plastic. Other materials for the formation of the bezel are within the scope of these descriptions.

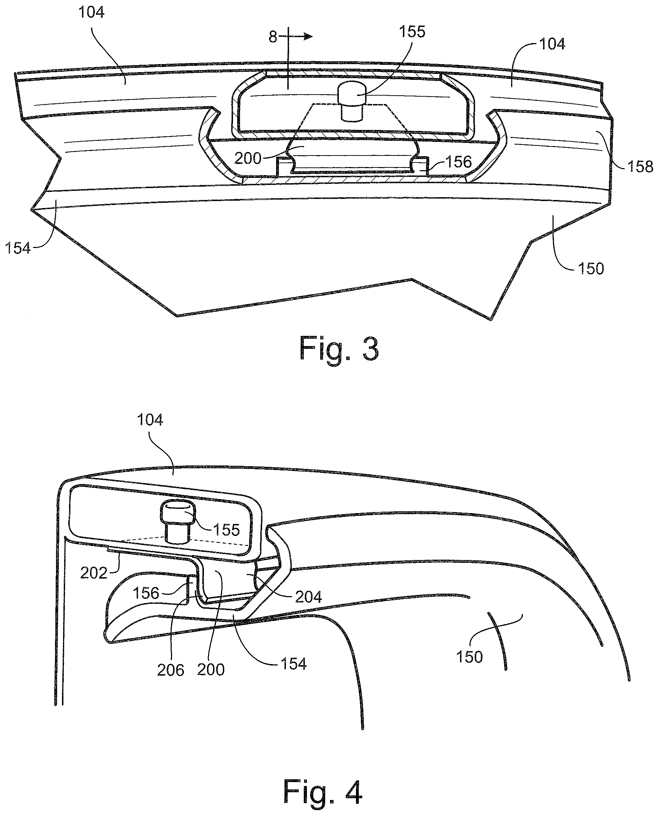

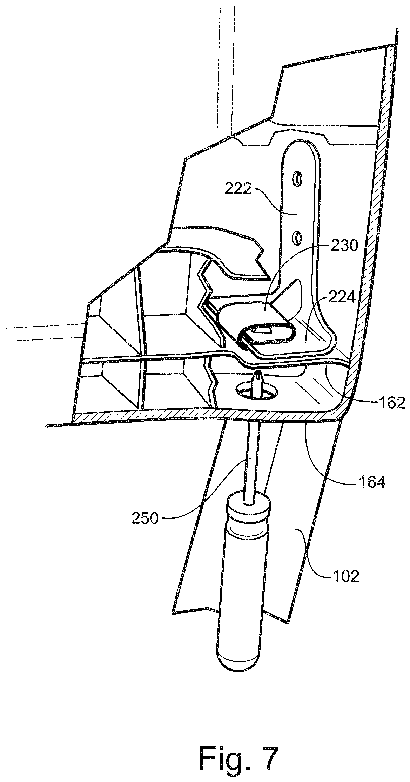

The bezel 150 is attached to the seat back frame 100 by two upper spring clips and two lower rigid brackets along the inner side of the bezel, which is opposite the outer surface and is contoured to engage the seat back frame. A right-side upper spring clip 200 and a right-side lower rigid bracket 220 are shown in broken view areas of Figure 2 with reference to Figures 7 and 3 respectively. A left-side upper spring clip is present behind the bezel 150 in symmetric relation to the illustrated right-side upper spring clip 200 without being expressly shown in Figure 2. Similarly, a left-side lower rigid bracket is present behind the bezel 150 in symmetric relation to the illustrated right-side lower rigid bracket 220 without being expressly shown in Figure 2. The upper spring clips 200 and the lower rigid brackets 220 are connected to and carried by the seat back frame 100 as described in the following. The bezel 150 is then easily removably attached to the seat back frame by the spring clips and rigid brackets.

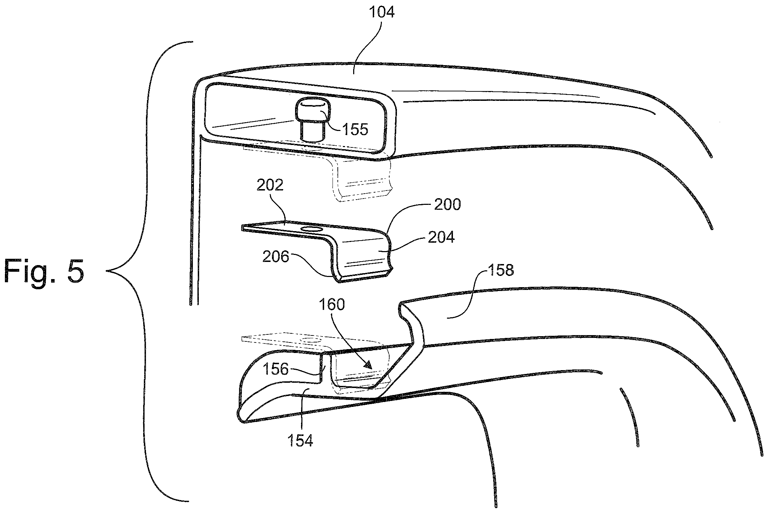

Figures 3 and 4 illustrate in detail the attachment of the bezel 150 to the top bar 104 of the seat back frame by the upper spring clip 200. Figure 5 shows the components involved in the attachment in an exploded view. The spring clip 200 is formed into an L-shape from a band or sheet of resilient material such as spring steel. The spring clip 200 is connected to the top bar 104 of the seat back frame 100 by a rivet or bolt 155. The spring clip 200 has a planar mounting plate 202 connected to top bar 104, a retaining shoulder 204 formed as approximately perpendicular to the mounting plate to define the L-shape, and a turned edge 206 extending away from the mounting plate to guide a retaining lip 156 of the bezel 150 as the bezel approaches the spring clip during assembly procedures.

The bezel 150 has an outer peripheral wall 154, from which the retaining lip 156 extends outwardly, and a hooked flange 158 extending outwardly from the peripheral wall such that a channel 160 (Figure 5) is formed between the lip 156 and flange 158. When the bezel 150 is connected to the seat frame 100, the hooked flange 158 of the bezel abuts the top bar 104 of the seat frame, and the retaining shoulder 204 of the spring clip is flexed slightly outward from the mounting plate 202 by the retaining lip 156. The spring force of the flexed retaining shoulder 204 holds the upper end of the bezel firmly in its assembled position.

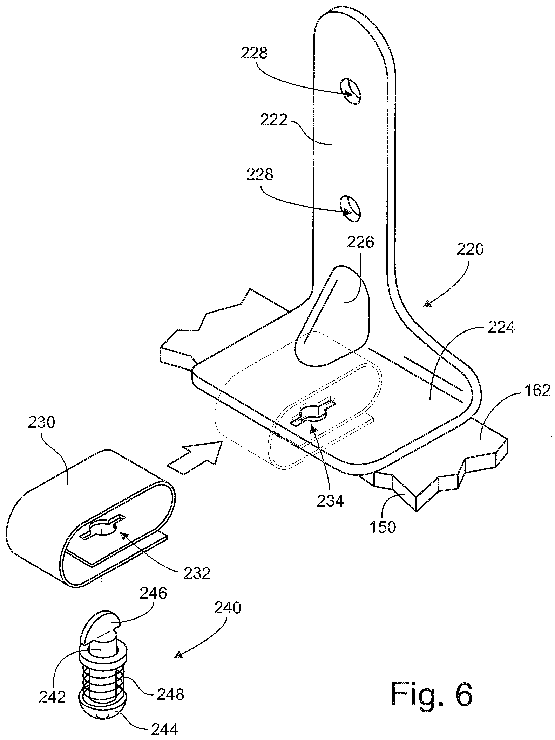

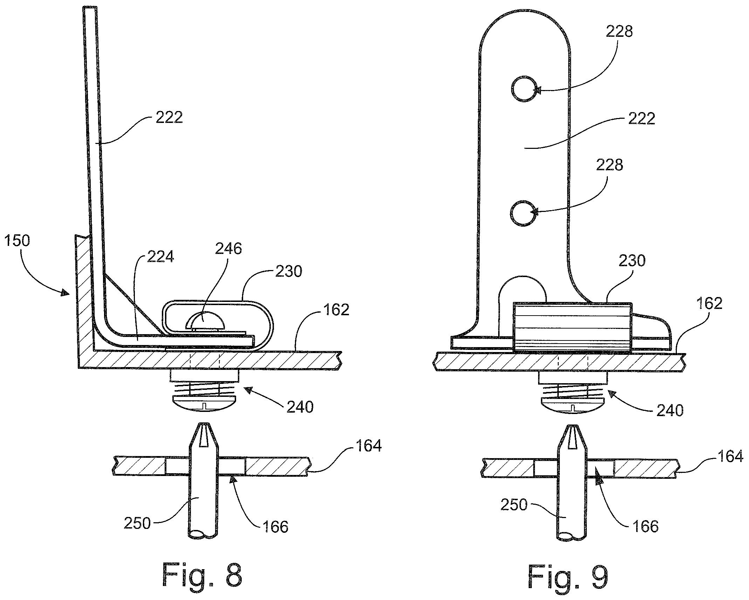

Figures 7-9 illustrate in detail the attachment of the bezel 150 to the L-shaped rigid bracket 220. Figure 6 shows the components involved in the attachment in an exploded view. The rigid bracket 220 has a planar mounting plate 222, a retaining shelf 224 formed as approximately perpendicular to the mounting plate to define the L-shape, and a diagonal cross piece 226 that strengthens the perpendicular arrangement of the retaining shelf and mounting plate. The rigid bracket 220 is formed from a rigid and durable material such as aluminum or steel. The planar mounting plate 222 is connected to the vertical arm 102 of the seat back frame by bolts or rivets though holes 228 formed in the mounting plate. A rolled spring retainer 230 is first clipped onto the retaining shelf 224. Overlapping portions of the rolled spring retainer 230 have aligned apertures 232 formed as central round holes and radial slots (Figure 6). The retaining shelf 224 has a matching aperture 234. The rolled spring retainer 230 is clipped onto the retaining shelf 224 with the apertures 232 and 234 aligned.

A spring-loaded connector 240, which engages the rolled spring retainer 230, removably attaches the bezel 150 to the retaining shelf 224. The connector 240 has a cylindrical shaft 242, a screw head 244 at one end thereof, and a wide key 246 opposite the screw head. When the bezel 150 is to be attached to the retaining shelf 224, the wide key 246 is passed through the radial slots of the aligned apertures 232 and 234 of the rolled spring retainer 230 and retaining shelf 224, with the cylindrical shaft 242 of the connector 240 passed through the central round holes of the apertures 232 and 234. The connector 240 is then turned one quarter of a rotation about the shaft 242 so that the wide key 246 loses alignment with the radial slots of the apertures 232 and 234 and is restricted by its size from passing through the central round holes of the apertures. This removably locks the attachment of the bezel 150 to the retaining shelf 224. A spring 248 coiled around the shaft 242 of the connector 240 biases the connector away from attachment, and thus presses the retaining shelf 224 and bezel 150 together when the key 246 is in its locked position.

In more detail as shown in Figures 7-9, a first internal rib 162 extending from a lower portion of the bezel 150 is trapped between the retaining shelf 224 and the compressed spring 248, with the shaft 242 of the connector 240 passed through an aperture formed through the first rib. A lower peripheral wall 164 of the bezel 150 is spaced from the first rib 162 and has an access hole 166 through which the screw head 244 of the connector 240 can be conveniently reached by a screwdriver 250.

Installing the bezel 150 onto the seat back frame 100 begins with tilting the bezel 150 relative to the seat back frame such that the top portion of the bezel approaches the top bar 104 and the bottom of the bezel is spaced from the seat back frame. The hooked flange 158 (Figure 4) of the bezel is brought into contact with the top bar 104. The turned edge 206 of the spring clip 200 enters the channel 160 (Figure 5) and guides the retaining lip 156 into abutment with the retaining shoulder 204 of the bezel as the bottom of the bezel is moved toward the seat back frame. The lower portion of the bezel then reaches its assembled position and the connector 240 is accessed by a screwdriver as shown in Figures 7-9. The spring loaded connector 240 is then compressed by the screwdriver to extend the key 246 through the apertures 232 and 234 of the rolled spring retainer 230 and retaining shelf 224. The connected 240 is then turned one quarter turn to secure it in its locked position.

While specific embodiments of the present invention have been described, it will be apparent to those skilled in the art that various modifications thereto can be made without departing from the scope of the invention.

## Claims

1. A bezel assembly for mounting a video monitor (50) onto a back of a passenger seat, the bezel assembly comprising:
a bezel (150) including an outer surface (153) in which a recess (152) is formed for receiving a video monitor (50), an inner side opposite the outer surface, a retaining lip (156) extending outwardly from the inner side, and an internal rib (162) connected to the inner side;
at least one spring clip (200) for attaching the retaining lip (156) to a seat back frame (100); and
at least one spring-loaded connector (240) having a screw head (244) engageable with a screw driver (250), for attaching the internal rib (162) to the seat back frame (100);
wherein the inner side of the bezel (150) is contoured to engage the seat back frame (100) such that when the inner side is brought into contact with the seat back frame (100) and the spring clip (200), the spring clip (200) holds the bezel (150) to the seat back frame (100) by spring force;
wherein the bezel (150) has a peripheral wall (164) with an access hole (166), the internal rib (162) is inward of the peripheral wall (164), **characterised in that** the spring-loaded connector (240) is configured to be installed through the access hole (166) and passed through aligned apertures (232, 234) through the internal rib (162), a seat back bracket (220), and overlapping portions of a spring retainer (230) installed on the seat back bracket (220)
such that the spring-loaded connector (240) is operable to be turned by the screw driver (250) to secure a bottom of the bezel (150) in place.

2. A bezel assembly according to claim 1, wherein the spring clip (200) comprises a mounting plate (202), a retaining shoulder (204) connected perpendicularly to the mounting plate, and a turned edge (206) connected to the retaining shoulder and extending away from the mounting plate to guide the retaining lip (156) of the bezel (150).

3. A bezel assembly according to claim 1, wherein the bezel (150) has peripheral wall (154) from which the retaining lip (156) extends outwardly, a hooked flange (158) extending outwardly from the peripheral wall, and a channel (160) formed between the retaining lip and the hooked flange.

4. A bezel assembly according to claim 1, wherein the spring-loaded connector (240) comprises a cylindrical shaft (242) and a wide key (246), wherein the bracket (220) is for attaching the internal rib (162) to the seat back frame (100) in cooperation with the spring-loaded connector (240), the aperture (234) having a central hole for receiving the shaft (242) and radial slots for passage of the wide key (246).

5. A bezel assembly according to claim 4, wherein the bracket (220) comprises a mounting plate (222) and a retaining shelf (224) in which the aperture (234) is formed, and wherein the retaining shelf is connected perpendicularly to the mounting plate.

6. A bezel assembly according to claim 1, wherein the access hole (166) is formed for permitting access to the spring-loaded connector (240).

7. A method of attaching a video monitor bezel onto a back of a passenger seat, the method comprising:
providing a seat back frame (100); and
providing a bezel (150) having an outer surface (153) in which a recess (152) is formed for receiving a video monitor (50), an inner side opposite the outer surface, a retaining lip (156) extending outwardly from the inner side, and an internal rib (162) connected to the inner side;
providing a spring clip (200) connected to the seat back frame;
providing a screw driver (250);
providing a connector (240) having a screw head (244) engageable with the screw driver, having a cylindrical shaft (242) and a wide key (246);
providing a contoured inner side of the bezel to engage the seat back frame;
bringing the inner side of the bezel into contact with the seat back frame;
attaching the retaining lip to the seat back frame by engaging the retaining lip with the spring clip; and
attaching the internal rib to the seat back frame by a quarter turn of the connector by the screw driver;
wherein the spring clip holds the bezel to the seat back frame by spring force; and
the bezel (150) has a peripheral wall (164) with an access hole (166), the internal rib (162) is inward of the peripheral wall (164), and the method is **characterised by** :
installing the spring-loaded connector (240) through the access hole (166) and passing it through aligned apertures through the internal rib (162), a seat back bracket (220), and overlapping portions of a spring retainer (230) installed on the seat back bracket (220); and
turning the spring-loaded connector (240) with the screw driver (250) to secure a bottom of the bezel (150) in place.

## Patentansprüche

1. Einfassungsanordnung zum Montieren eines Videomonitors (50) an einer Rückenlehne eines Passagiersitzes, wobei die Einfassungsanordnung Folgendes umfasst:
eine Einfassung (150), die eine Außenfläche (153), in der eine Ausnehmung (152) zur Aufnahme eines Videomonitors (50) ausgebildet ist, eine Innenseite gegenüber der Außenfläche, eine Haltelippe (156), die sich von der Innenseite nach außen erstreckt, und eine innere Rippe (162), die mit der Innenseite verbunden ist, aufweist;
mindestens eine Federklemme (200) zum Anbringen der Haltelippe (156) an einem Sitzlehnenrahmen (100); und
mindestens einen federbelasteten Verbinder (240) mit einem Schraubenkopf (244), der mit einem Schraubendreher (250) zum Anbringen der inneren Rippe (162) an dem Sitzlehnenrahmen (100) in Eingriff gebracht werden kann;
wobei die Innenseite der Einfassung (150) eine Kontur zu einem solchen Eingriff des Sitzlehnenrahmens (100) aufweist, dass, wenn die Innenseite in Kontakt mit dem Sitzlehnenrahmen (100) und der Federklemme (200) gebracht wird, die Federklemme (200) die Einfassung (150) durch Federkraft an dem Sitzlehnenrahmen (100) hält;
wobei die Einfassung (150) eine Umfangswand (164) mit einem Zugangsloch (166) aufweist, sich die innere Rippe (162) einwärts der Umfangswand (164) befindet, **dadurch gekennzeichnet, dass** der federbelastete Verbinder (240) dazu konfiguriert ist, durch das Zugangsloch (166) installiert und durch aufeinander ausgerichtete Öffnungen (232, 234) durch die innere Rippe (162), eine Sitzlehnenhalterung (220) und überlappende Teile eines an der Sitzlehnenhalterung (220) installierten Federhalters (230) geführt zu werden,
so dass der federbelastete Verbinder (240) zum Drehen durch den Schraubendreher (250) zum Fixieren eines unteren Endes der Einfassung (150) in Position betätigt werden kann.

2. Einfassungsanordnung nach Anspruch 1, wobei die Federklemme (200) eine Montageplatte (202), eine Halteschulter (204), die senkrecht mit der Montageplatte verbunden ist, und einen umgelegten Rand (206), der mit der Halteschulter verbunden ist und sich von der Montageplatte weg erstreckt, um die Haltelippe (156) der Einfassung (150) zu führen, umfasst.

3. Einfassungsanordnung nach Anspruch 1, wobei die Einfassung (150) eine Umfangswand (154), von der sich die Haltelippe (156) nach außen erstreckt, einen hakenförmigen Flansch (158), der sich von der Umfangswand nach außen erstreckt, und einen Kanal (160), der zwischen der Haltelippe und dem hakenförmigen Flansch ausgebildet ist, aufweist.

4. Einfassungsanordnung nach Anspruch 1, wobei der federbelastete Verbinder (240) einen zylindrischen Schaft (242) und einen breiten Keil (246) umfasst, wobei die Halterung (220) der Anbringung der inneren Rippe (162) an dem Sitzlehnenrahmen (100) unter Zusammenwirkung mit dem federbelasteten Verbinder (240) dient, wobei die Öffnung (234) ein mittleres Loch zur Aufnahme des Schafts (242) und radiale Schlitze zum Hindurchführen des breiten Keils (246) aufweist.

5. Einfassungsanordnung nach Anspruch 4, wobei die Halterung (220) eine Montageplatte (222) und einen Halteabsatz (224) umfasst, in dem die Öffnung (234) ausgebildet ist, und wobei der Halteabsatz senkrecht mit der Montageplatte verbunden ist.

6. Einfassungsanordnung nach Anspruch 1, wobei das Zugangsloch (166) zum Gestatten von Zugang zu dem federbelasteten Verbinder (240) ausgebildet ist.

7. Verfahren zum Anbringen einer Videomonitoreinfassung an einer Rückenlehne eines Passagiersitzes, wobei das Verfahren Folgendes umfasst:
Bereitstellen eines Sitzlehnenrahmens (100); und
Bereitstellen einer Einfassung (150), die eine Außenfläche (153), in der eine Ausnehmung (152) zur Aufnahme eines Videomonitors (50) ausgebildet ist, eine Innenseite gegenüber der Außenfläche, eine Haltelippe (156), die sich von der Innenseite nach außen erstreckt, und eine innere Rippe (162), die mit der Innenseite verbunden ist, aufweist;
Bereitstellen einer Federklemme (200), die mit dem Sitzlehnenrahmen verbunden ist;
Bereitstellen eines Schraubendrehers (250);
Bereitstellen eines Verbinders (240) mit einem Schraubenkopf (244), der mit dem Schraubendreher in Eingriff gebracht werden kann und einen zylindrischen Schaft (242) und einen breiten Keil (246) aufweist;
Bereitstellen einer eine Kontur aufweisenden Innenseite der Einfassung zur Ineingriffnahme des Sitzlehnenrahmens;
Inkontaktbringen der Innenseite der Einfassung mit dem Sitzlehnenrahmen;
Anbringen der Haltelippe an dem Sitzlehnenrahmen durch Ineingriffbringen der Haltelippe mit der Federklemme; und
Anbringen der inneren Rippe an dem Sitzlehnenrahmen durch eine Viertelumdrehung des Verbinders durch den Schraubendreher;
wobei die Federklemme die Einfassung durch Federkraft an dem Sitzlehnenrahmen hält; und
die Einfassung (150) eine Umfangswand (164) mit einem Zugangsloch (166) aufweist, sich die innere Rippe (162) einwärts der Umfangswand (164) befindet, und das Verfahren **gekennzeichnet ist durch**:
Installieren des federbelasteten Verbinders (240) **durch** das Zugangsloch (166) und sein Hindurchführen **durch** aufeinander ausgerichtete Öffnungen **durch** die innere Rippe (162), eine Sitzlehnenhalterung (220) und überlappende Teile eines an der Sitzlehnenhalterung (220) installierten Federhalters (230); und
Drehen des federbelasteten Verbinders (240) mit dem Schraubendreher (250) zum Fixieren eines unteren Endes der Einfassung (150) in Position.

## Revendications

1. Ensemble cadre pour le montage d'un moniteur vidéo (50) sur un dossier d'un siège de passager, l'ensemble cadre comprenant :
un cadre (150) comprenant une surface extérieure (153) dans laquelle un évidement (152) est formé pour recevoir un moniteur vidéo (50), un côté intérieur opposé à la surface extérieure, une lèvre de retenue (156) s'étendant vers l'extérieur depuis le côté intérieur, et une nervure interne (162) reliée au côté intérieur ;
au moins une attache à ressort (200) pour fixer la lèvre de retenue (156) à une armature de dossier de siège (100) ; et
au moins un connecteur à ressort (240) ayant une tête de vis (244) pouvant être mise en prise avec un tournevis (250), pour fixer la nervure interne (162) à l'armature de dossier de siège (100) ;
le côté intérieur du cadre (150) étant profilé pour venir en prise avec l'armature de dossier de siège (100) de sorte que lorsque le côté intérieur est amené en contact avec l'armature de dossier de siège (100) et l'attache à ressort (200), l'attache à ressort (200) maintienne le cadre (150) sur l'armature de dossier de siège (100) par une force de ressort ;
le cadre (150) ayant une paroi périphérique (164) avec un trou d'accès (166), la nervure interne (162) étant vers l'intérieur de la paroi périphérique (164), **caractérisé en ce que** le connecteur à ressort (240) est conçu pour être installé à travers le trou d'accès (166) et passé à travers des ouvertures (232, 234) alignées à travers la nervure interne (162), un support de dossier de siège (220), et des parties chevauchantes d'un dispositif de retenue à ressort (230) installées sur le support de dossier de siège (220) de sorte que le connecteur à ressort (240) puisse être actionné pour être tourné par le tournevis (250) pour fixer une partie inférieure du cadre (150) en place.

2. Ensemble cadre selon la revendication 1, l'attache à ressort (200) comprenant une plaque de montage (202), un épaulement de retenue (204) relié perpendiculairement à la plaque de montage, et un bord tourné (206) relié à l'épaulement de retenue et s'étendant à l'opposé de la plaque de montage pour guider la lèvre de retenue (156) du cadre (150).

3. Ensemble cadre selon la revendication 1, le cadre (150) ayant une paroi périphérique (154) à partir de laquelle la lèvre de retenue (156) s'étend vers l'extérieur, une bride à crochet (158) s'étendant vers l'extérieur à partir de la paroi périphérique, et un canal (160) formé entre la lèvre de retenue et la bride à crochet.

4. Ensemble cadre selon la revendication 1, le connecteur à ressort (240) comprenant un arbre cylindrique (242) et une clavette large (246), le support (220) étant destiné à fixer la nervure interne (162) à l'armature de dossier de siège (100) en coopération avec le connecteur à ressort (240), l'ouverture (234) ayant un trou central pour recevoir l'arbre (242) et des fentes radiales pour le passage de la clavette large (246).

5. Ensemble cadre selon la revendication 4, le support (220) comprenant une plaque de montage (222) et une tablette de retenue (224) dans laquelle l'ouverture (234) est formée, et la tablette de retenue étant reliée perpendiculairement à la plaque de montage.

6. Ensemble cadre selon la revendication 1, le trou d'accès (166) étant formé pour permettre l'accès au connecteur à ressort (240).

7. Procédé de fixation d'un cadre de moniteur vidéo sur un dossier d'un siège de passager, le procédé comprenant les étapes consistant à :
fournir une armature de dossier de siège (100) ; et
fournir un cadre (150) ayant une surface extérieure (153) dans laquelle un évidement (152) est formé pour recevoir un moniteur vidéo (50), un côté intérieur opposé à la surface extérieure, une lèvre de retenue (156) s'étendant vers l'extérieur du côté intérieur, et une nervure interne (162) reliée au côté intérieur ;
fournir une attache à ressort (200) reliée à l'armature de dossier de siège ;
fournir un tournevis (250) ;
fournir un connecteur (240) ayant une tête de vis (244) pouvant venir en prise avec le tournevis, ayant un arbre cylindrique (242) et une clavette large (246) ;
fournir un côté intérieur profilé du cadre pour venir en prise avec l'armature de dossier de siège ;
amener le côté intérieur du cadre en contact avec l'armature de dossier de siège ;
fixer la lèvre de retenue à l'armature de dossier de siège en mettant en prise la lèvre de retenue avec l'attache à ressort ; et
fixer la nervure interne à l'armature de dossier de siège par un quart de tour du connecteur à l'aide d'un tournevis ;
l'attache à ressort maintenant le cadre à l'armature de dossier de siège par une force de ressort ; et
le cadre (150) ayant une paroi périphérique (164) avec un trou d'accès (166), la nervure interne (162) étant vers l'intérieur de la paroi périphérique (164), et le procédé étant **caractérisé par** les étapes consistant à :
installer le connecteur à ressort (240) à travers le trou d'accès (166) et le faire passer à travers des ouvertures alignées à travers la nervure interne (162), un support de dossier de siège (220), et des parties chevauchantes d'un dispositif de retenue à ressort (230) installé sur le support de dossier de siège (220) ; et
faire tourner le connecteur à ressort (240) avec le tournevis (250) pour fixer une partie inférieure du cadre (150) en place.
